(19) Europäisches Patentamt
European Patent Office
Office européen des brevets

(11) **EP 2 443 076 B1**

(12) **EUROPEAN PATENT SPECIFICATION**

(45) Date of publication and mention
of the grant of the patent:
**09.04.2014 Bulletin 2014/15**

(51) Int Cl.:
*C04B 41/50* [(2006.01)]   *C04B 41/52* [(2006.01)]
*C04B 41/87* [(2006.01)]   *C04B 41/89* [(2006.01)]

(21) Application number: **09785959.9**

(22) Date of filing: **19.06.2009**

(86) International application number:
**PCT/IB2009/006002**

(87) International publication number:
**WO 2010/146410 (23.12.2010 Gazette 2010/51)**

(54) **PHOTOCATALYTIC CERAMIC ARTICLE AND METHOD FOR ITS PRODUCTION**

PHOTOKATALYTISCHER KERAMIKGEGENSTAND UND HERSTELLUNGSVERFAHREN DAFÜR

ARTICLE CÉRAMIQUE PHOTOCATALYTIQUE ET SON PROCÉDÉ DE PRODUCTION

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(43) Date of publication of application:
**25.04.2012 Bulletin 2012/17**

(73) Proprietor: **Granitifiandre S.p.A.**
**Castellarano (IT)**

(72) Inventors:
• **PELLICELLI, Giovanni**
**I-42014 Castellarano (IT)**
• **TUCCI, Antonella**
**I-40138 Bologna (IT)**
• **RAMBALDI, Elisa**
**I- 40138 Bologna (IT)**

(74) Representative: **Mangini, Simone et al**
**Studio Torta S.p.A.**
**Via Viotti, 9**
**10121 Torino (IT)**

(56) References cited:
**EP-A- 0 470 340**        **US-A1- 2004 092 393**
**US-A1- 2008 003 367**    **US-B1- 6 210 779**

• **TOBALDI D M ET AL: "Photocatalytic activity for exposed building materials" JOURNAL OF THE EUROPEAN CERAMIC SOCIETY, ELSEVIER SCIENCE PUBLISHERS, BARKING, ESSEX, GB, vol. 28, no. 14, 1 October 2008 (2008-10-01), pages 2645-2652, XP023610739 ISSN: 0955-2219 [retrieved on 2008-08-06]**

**Description**

TECHNICAL FIELD

The present invention relates a method for producing an article and to said article.

STATE OF THE PRIOR ART

In the field of ceramic materials, it is known to coat objects with $TiO_2$ so that they will present photocatalytic properties. The coating is generally made using sol-gel systems and/or by applying nanometric titanium-dioxide particles in order to obtain materials that are easy to clean and are able to purify partially the air from organic pollutants. In order to make $TiO_2$ to adhere effectively to the surface of objects, organic polymers are often used.

US6210779 discloses a multi-functional materials which have a photocatalytic layer with a photocatalytic function disposed on the surface of a base through an amorphous binder layer 6 interposed therebetween. Photocatalytic particles of the photocatalytic layer are joined together by a surface energy or solid-state sintering. A lower layer of the photocatalytic layer is embedded in the binder layer such that an intermediate layer is formed between the binder layer and the photocatalytic layer.

Known methods used for coating ceramic objects with titanium dioxide and the articles thus obtained have a number of drawbacks, some of which are mentioned below.
The use of sol-gel methods can cause emission of organic compounds that are pollutant and potentially detrimental for health.

Known techniques are rather inflexible, and cannot be used for different types of tiles. It is not possible to obtain various aesthetic effects.

The catalytic effects obtained are relatively poor and are often not reproducible.

The solidity of adhesion of the $TiO_2$ layer to the items is relatively low.

Production costs are often high.

OBJECT OF THE INVENTION

The aim of the present invention is to provide a method for producing an article as well and an article that will enable the drawbacks of the known art to be overcome, at least partially, and at the same time will be easy and economically advantageous.

According to the present invention method for producing an article as well as said article are provided, as set forth in the ensuing independent claims and, preferably, in any one of the claims that depend directly or indirectly upon the independent claims.

EMBODIMENTS OF THE INVENTION

According to a first aspect of the present invention, a method is provided for the production of a treated article. The method comprises a step of surface treatment, during which an inorganic adhesive is applied on a surface of a base product comprising (in particular, made of) ceramic material. The method further comprises a second, application, step, which is subsequent to the step of surface treatment and during which a $TiO_2$ powder having a specific surface area ranging from approximately 5 to approximately 20 $m^2/g$ is deposited at least partially on the inorganic adhesive so as to obtain an intermediate article; and a heating step, during which the intermediate article is heated.

Typically, the treated article is a tile.

According to some embodiments, the $TiO_2$ powder has a specific surface area ranging from 10 to 20 $m^2/g$. Advantageously, the $TiO_2$ powder has a specific surface area ranging from 10 to 15 $m^2/g$.

The specific surface area is to be understood as the ratio between the surface area and the weight of a specimen. The specific surface area is measured using the gas-adsorption (BET) method. In particular, the FlowSorb II 2300 (Micrometrics®) equipment is used, following the accompanying standard instructions.

The $TiO_2$ powder has (in particular consists of) particles with an average diameter greater than or equal to 0.20 $\mu$m and less than or equal to 1.0 $\mu$m. Advantageously, the $TiO_2$ particles have an average diameter greater than or equal to 0.2 $\mu$m (in particular, greater than or equal to 0.2 $\mu$m and less than or equal to 0.8 $\mu$m). According to some embodiments, the $TiO_2$ particles have an average diameter of less than or equal to 0.5 $\mu$m and greater than or equal to 0.2 $\mu$m.

Unless otherwise explicitly specified, in the present text, the diameter of the particles is measured using the scanning electron microscope (SEM). In particular, a SEM (Zeiss EVO 40.D) is used connected to an energy-dispersive X-ray spectrometer (EDS) (Inca, Oxford Instruments, UK). The average diameter is calculated by computing the average of the measurements of the diameter of 100 randomly selected particles. The diameter of the particles is measured before said particles have been applied on the base product (specifically, as regards the titanium-dioxide particles, on the inorganic adhesive).

The method comprises a step of preparation of the base product, during which the base product is obtained by pressing, followed by thermal treatment. The step of preparation of the base product precedes the step of application.

Advantageously, the base product is thermally treated at a temperature of from 900 to 1250°C for a time ranging from 30 to 70 minutes, in particular so as to obtain a substantial solidification of the base product.

According to some embodiments, during the application step, an aqueous suspension of the $TiO_2$ powder is applied on the inorganic adhesive.

According to some embodiments, the inorganic adhesive comprises from 30 wt% to 50 wt% (advantageously, from 35 wt% to 48 wt%), with respect to its own total weight, of $SiO_2$. The inorganic adhesive comprises from 0 wt% to 30 wt% (advantageously, from 0.3 wt% to 20 wt%), with respect to its own total weight, of $Al_2O_3$. The inorganic adhesive comprises from 0 wt% to 40 wt% (advantageously, from 5 wt% to 38 wt%), with respect to its own total weight, of $B_2O_3$. The inorganic adhesive comprises from 0 wt% to 15 wt% (advantageously, from 0 wt% to 13 wt%), with respect to its own total weight, of BaO. The inorganic adhesive comprises from 0 wt% to 15 wt% (according to some embodiments, from 0.3 wt% to 20 wt%), with respect to its own total weight, of CaO. The inorganic adhesive comprises from 0 wt% to 5 wt% (advantageously, from 0 wt% to 3 wt%), with respect to its own total weight, of MgO. The inorganic adhesive comprises from 0 wt% to 35 wt% (advantageously, from 0 wt% to 30 wt%), with respect to its own total weight, of ZnO. The inorganic adhesive comprises from 5 wt% to 20 wt% (advantageously, from 8 wt% to 18 wt%), with respect to its own total weight, of $Na_2O+K_2O$. The inorganic adhesive comprises from 0 wt% to 10 wt% (advantageously, from 0 wt% to 5 wt%), with respect to its own total weight, of $Li_2O$.

Advantageously, the inorganic adhesive is constituted by the combination of part of the components or of all of the components indicated above in the corresponding percentages. In other words, the inorganic adhesive does not comprise further components.

Typically, the inorganic adhesive has (in particular, is constituted by) a composition as identified in Table 1 appearing below.

Table 1

| Component | Weight-percentage range with respect to total weight of the adhesive (100 wt%) |
|---|---|
| $SiO_2$ | 30-50 |
| $Al_2O_3$ | 5-30 |
| $B_2O_3$ | 0-30 |
| BaO | 0-15 |
| CaO | 5-15 |
| MgO | 0-5 |
| ZnO | 0-35 |
| $Na_2O+K_2O$ | 5-20 |
| $Li_2O$ | 0-10 |

According to some advantageous embodiments, the inorganic adhesive has a softening temperature ranging between 550°C and 800°C (the softening temperature is measured in accordance with the IS0540:2008 standard).

Advantageously, the heating step comprises a thermal treatment phase, during which the intermediate article is kept at a temperature equal to or higher than the softening temperature of the inorganic adhesive.

The softening temperature can be determined using a heating microscope according to the IS0540:2008 standard.

Advantageously, during the step of thermal treatment the intermediate article is kept at a temperature ranging from 550°C to 900°C. Advantageously, during the step of thermal treatment, the intermediate article is kept at a temperature greater than or equal to 600°C (in particular, lower than or equal to 850°C).

According to some embodiments, the step of thermal treatment has a duration longer than or equal to 20 minutes. Advantageously, the step of thermal treatment has a duration shorter than or equal to 100 minutes. According to particular embodiments, the step of thermal treatment has a duration shorter than or equal to 75 minutes.

According to some embodiments, the inorganic adhesive comprises (in particular, is constituted by) particles of inorganic adhesive with average diameter greater than or equal to 3 $\mu$m and less than or equal to 15 $\mu$m. Advanta-

geously, the particles of inorganic adhesive have an average diameter greater than or equal to 3 $\mu$m and less than or equal to 8 $\mu$m. The dimensions indicated above make it possible to obtain, after heating, an inorganic adhesive that is homogeneous and less stressed.

According to some embodiments, the inorganic adhesive is applied in the form of an aqueous suspension (in particular, comprising an amount of adhesive of from 0.3 wt% to 10 wt%). The suspension is applied in such a way that the intermediate article has from 0.005 to 0.02 g/cm$^2$ of suspension on its surface and the intermediate (and/or treated) article has from 0.50 to 5g/m$^2$ of adhesive on its surface. Advantageously, application is made using an airbrush at a pressure of from 10 to 40 bar.

According to some embodiments, the aqueous suspension of the adhesive comprises from 0.0 to 0.5 wt% (in particular, from 0.1 to 0.5 wt%) of a deflocculant, with respect to the dry weight of the adhesive.

According to some embodiments, the aqueous suspension of titanium dioxide comprises from 0 wt% to 2 wt% (in particular, from 1 wt% to 2 wt%) of a deflocculant, with respect to the dry weight of titanium dioxide.

Advantageously, the deflocculant has a sodium-silicate and/or a sodium-acrylate base. According to some embodiments, the sodium-silicate-based deflocculant comprises 14.3 wt% of $Na_2O$, 3.3 wt% of $P_2O_5$, and 25.5 wt% of $SiO_2$ (weight percentages with respect to the total weight of the deflocculant), and is designed to reduce the risk of formation of agglomerates.

Advantageously, the aqueous suspension of titanium dioxide has a concentration ranging from 1 to 30 g/l of $TiO_2$ powder with respect to the volume of water.

Advantageously, during the application step, an amount of suspension of titanium dioxide is applied such that the intermediate article will present on its own surface from 0.005 to 0.03 g/cm$^2$ of suspension of titanium dioxide. The intermediate article (and/or the treated article) has on its own surface from 0.3 to 3 g/m$^2$ of $TiO_2$.

According to some embodiments, the $TiO_2$ powder is applied by means of airbrush. Advantageously, the $TiO_2$ powder is applied at a pressure of from 10 to 40 bar.

It should be emphasized that the weight ratio between the amount of adhesive and the amount of $TiO_2$ is chosen so as to obtain a treated article that is resistant and, at the same time, has a high photocatalytic activity. In this regard, it should be noted that the weight percentage of titanium dioxide, with respect to the sum of titanium dioxide and of the inorganic adhesive of the two applied layers, is, advantageously, greater than or equal to 23 wt% and, in particular, less than 50 wt%.

Likewise, the weight percentage of the inorganic adhesive, with respect to the sum of titanium dioxide and of the inorganic adhesive of the two applied layers, is greater than or equal to 50 wt% and, advantageously, less than 77 wt%. Advantageously, during the step of surface treatment the base product is at a temperature ranging from 130°C to 230°C (advantageously, from 150°C to 200°C).

The fact that the base product has a relatively high temperature during application of the inorganic adhesive enables the adhesive itself to distribute homogeneously over a surface of the base product.

This is particularly useful when the adhesive is applied in aqueous suspension since a fast evaporation of water prevents formation of accumulations of adhesive in regions corresponding to surface imperfections (for example, depressions of extremely small dimensions) of the base product.

In a way similar to what has been said above, advantageously, during the application step the base product is at a temperature ranging from 130°C to 230°C (advantageously, from 150°C to 200°C).

According to some advantageous embodiments, to cause the base product to be at a relatively high temperature (as defined above) during the step of surface treatment (and advantageously during the application step), the base product is heated (for example, inside a purposely designed kiln) prior to the step of surface treatment. It should be emphasized that, in these cases, the thermal capacity of the base product enables the base product itself to preserve a relatively high temperature (the temperature of the base product drops relatively slowly) during the step of surface treatment (and, advantageously, the application step).

By conducting some tests it is possible to show experimentally what are the most favourable conditions to obtain drying (that is, evaporation of the aqueous component) from the surface of the base article (and/or the base article on which the inorganic adhesive has been applied).

According to a second aspect of the present invention, a method is provided for obtaining a treated article. The method comprises a step of surface treatment, during which an inorganic adhesive is applied on a surface of a base product comprising (in particular, constituted by) ceramic material. The method further comprises: an application step, which at least partially follows the step of surface treatment and during which a $TiO_2$ powder having (in particular, consisting of) particles of $Ti_2O$ with an average diameter greater than or equal to 0.20 $\mu$m is deposited at least partially on the inorganic adhesive so as to obtain an intermediate article; and a heating step, during which the intermediate article is heated.

According to some embodiments, the $TiO_2$ particles have an average diameter of less than or equal to 1.0 $\mu$m. Advantageously, the $TiO_2$ particles have an average diameter greater than or equal to 0.2 $\mu$m (in particular greater than or equal to 0.2 $\mu$m and less than or equal to 0.8 $\mu$m). According to some embodiments, the $TiO_2$ particles have an

average diameter of less than or equal to 0.5 μm but greater than or equal to 0.2 μm.

Using the titanium-oxide powder according to the present invention, experiments have surprisingly shown that it is possible to obtain a treated article that is extremely active (i.e., one that is easy to clean and/or has a high capacity for purifying the air) over a long period of time and that does not require the use of organic polymers. In particular, it has been noted that, during the heating step, the particles of the powder combine with each other in a surprising way (they bind together) in such a way as to create an extremely active and resistant outer layer. In this regard, it should be emphasized that powders displaying the characteristics described above have until now been considered unsuitable for rendering surfaces active, precisely because they have a limited active surface.

It should also be emphasized that the powders described above according to the present invention are also easy to handle and relatively non-volatile. Powders with smaller dimensions could be potentially entail health risks for the operators.

According to some embodiments, the method of the second aspect of the present invention is implemented according to what has been described above with reference to the first aspect of the present invention.

According to a third aspect of the present invention, a treated article is provided, obtained according to what has been described as regards the first aspect and/or second aspect of the present invention.

According to a fourth aspect of the present invention, a treated article is provided, obtainable according to what has been described as regards the first aspect and/or second aspect of the present invention.

According to specific embodiments, the treated article is a tile.

According to a fifth aspect of the present invention, a treated article is provided comprising: a base product; a bottom layer, which is set on a surface of the base product and comprises (more in particular, consists of) an inorganic adhesive; and a first top layer, which comprises (more in particular, consists of) $TiO_2$ particles and is deposited on the inorganic adhesive in such a way that the bottom layer is set between the base product and the first top layer. Advantageously, the inorganic adhesive and the $TiO_2$ particles are defined according to what is indicated as regards the first aspect and/or the second aspect of the present invention.

In particular, according to some advantageous embodiments, the weight percentage of $TiO_2$ with respect to the sum of the weight of titanium dioxide and of the inorganic adhesive is greater than or equal to 23 wt% and, advantageously, less than 50 wt%.

Likewise, the weight percentage of the inorganic adhesive, with respect to the sum of titanium dioxide and of the inorganic adhesive of the two applied layers, is greater than or equal to 50 wt% and, advantageously, less than 77 wt%.

According to some embodiments, the treated article has on its own surface from 0.3 to 3 $g/m^2$ of $TiO_2$.

This range has been identified as the best compromise between resistance, efficiency, and costs involved.

According to some embodiments, the treated article is defined in accordance with the third aspect or fourth aspect of the present invention.

The contents of the patent application PCTIT0900028 filed in the name of the present applicant is herein cited.

Further characteristics of the present invention will emerge from the ensuing description of some examples, which are provided merely by way of non-limiting illustration.

**Example 1**

A inorganic adhesive "F263" (distributed by IRIS CERAMICA® S.p.A GLAZES DIVISION), which has the chemical composition given in Table 2 and a softening point of 670°C (the softening-temperature range was determined by using a heating microscope in accordance with the IS0540:2008 standard), was applied as an aqueous suspension on a surface of a fired ceramic product brought to a temperature of 130°C. The suspension had a weight percentage (with respect to the total weight of the suspension) of 2.6 wt% of F263. Application was carried out with an airbrush Airless (distributed by Air Power Group®), using a pressure of 30 bar. The amount of suspension applied was regulated in such a way as to apply approximately 0.008 $g/cm^2$ of F263 suspension with respect to the surface of the ceramic product.

At this point, the specimen was dried for 10 minutes at 130°C. This was followed by application of 0.7 μm of an aqueous suspension of titanium-dioxide powder (KRONOS 1077 with a specific surface area of 11.5 $m^2/g$ and an average diameter D(v.0.5) measured by means of a laser granulometer - in particular, using a laser granulometer Mastersizer Microplus Ver.2.19 (Malvern Instruments® Ltd). Said suspension had a concentration of titanium dioxide of 8g/l (weight of powder/volume of water). Application was carried out with an airbrush Airless (distributed by Air Power Group®), using a pressure of 30 bar. The amount of suspension applied was regulated in order to apply approximately 0.008 $g/cm^2$ of titanium-dioxide suspension with respect to the surface of the ceramic product, corresponding to 0.63$g/m^2$ of $TiO_2$.

The volume of titanium dioxide was 15 vol% of the sum of the volumes of titanium dioxide and of the inorganic adhesive (F263); the weight percentage of titanium dioxide with respect to the sum of the weights of titanium dioxide and of the inorganic adhesive (F263) was 23.2 wt%.

The specimen thus obtained (treated with inorganic adhesive and titanium dioxide) was immediately fired in a single-layer roller kiln Solar mod.F.R.S.2.5/300/1250°C (produced by Solar Impianti s.r.l.) with the following thermal cycle: 11 minutes of pre-heating from room temperature to a temperature of 710°C, 24 minutes in the firing area at 710°C, and 24 minutes of cooling for a total 59 minutes.

Table 2

|  | Weight-percentage composition with respect to total weight of the adhesive (102 wt%) |
|---|---|
| $SiO_2$ | 44 wt% |
| $Al_2O_3$ | 4 wt% |
| $B_2O_3$ | 25 wt% |
| BaO | 9 wt% |
| CaO | 2 wt% |
| ZnO | 5 wt% |
| $Na_2O+K_2O$ | 11 wt% |
| $Li_2O$ | 2 wt% |

**Example 2**

To the inorganic adhesive "F263" (distributed by IRIS CERAMICA® S.p.A GLAZES DIVISION), which has the chemical composition given in Table 2 and a softening point of 670°C (the softening-temperature range was determined by using a heating microscope in accordance with the IS0540:2008 standard), there was added an amount of 0.5 wt% (with respect to the weight of the adhesive) of the deflocculant Reoflux E/1380 (LAMBERTI CERAMIC ADDITIVES® - Reoflux E/1380 is mainly sodium silicate and comprises the following weight percentages with respect to its own total weight: 14.3 wt% of $Na_2O$, 3.3 wt% of $P_2O_5$, 25.5 wt% of $SiO_2$).

The mix thus obtained was applied as an aqueous suspension on a surface of a fired ceramic product brought to a temperature of 130°C. The suspension had a weight percentage (with respect to the total weight) of 2.6 wt% of F263. Application was carried out with an airbrush Airless (distributed by Air Power Group®), using a pressure of 30 bar. The amount of suspension applied was regulated in such a way as to apply approximately 0.008 g/cm$^2$ of F263 suspension with respect to the surface of the ceramic product.

At this point, the specimen was dried for 10 minutes at 130°C. To a titanium dioxide powder (KRONOS 1077 with specific surface area of 11.5 m$^2$/g), 1.5 wt% (with respect to the weight of titanium dioxide) of the deflocculant Reoflux E/1380 (LAMBERTI CERAMIC ADDITIVES®) was added in such a way as to obtain a mix.

An aqueous suspension of the mix thus obtained was then applied on a surface of the ceramic product (to which the inorganic adhesive had already been applied). Said suspension had a concentration of titanium dioxide of 8g/l (weight of powder/volume of water). Application was carried out with an airbrush Airless (distributed by Air Power Group®), using a pressure of 30 bar. The amount of suspension applied was regulated in such a way as to apply approximately 0.008 g/cm$^2$ of titanium-dioxide suspension, with respect to the surface of the ceramic product, corresponding to 0.63 g/m$^2$ of $TiO_2$.

The volume of titanium dioxide was 15 vol% of the sum of the volumes of titanium dioxide and of the inorganic adhesive (F263), whilst the weight percentage, once again referred to titanium dioxide, was 23.2 wt%.

The specimen thus obtained (treated with inorganic adhesive and titanium dioxide) was immediately fired in a single-layer roller kiln Solar mod.F.R.S.2.5/300/1250°C (produced by Solar Impianti s.r.l.) with the following thermal cycle: 11 minutes of pre-heating from room temperature to a temperature of 710°C, 30 minutes in the firing area at 710°C, 24 minutes of cooling for a total of 65 minutes.

**Example 3**

An inorganic adhesive "FC-37010" (distributed by Ferro Italia S.p.A.), which has the chemical composition given in Table 3, with average diameter of 4 μm measured with scanning electron microscope (SEM Zeiss EVO 40. D) and a softening point of 650°C (the softening-temperature range was determined using a heating microscope according to the IS0540:2008 standard), was applied as aqueous suspension on a surface of a fired ceramic product brought to the temperature of 180°C. The suspension had a concentration of inorganic adhesive of 9g/l. Application was carried out by means of an airbrush Airless (distributed by Air Power Group®) using a pressure of 35 bar. The amount of suspension applied was regulated so as to apply approximately 0.01 g/cm$^2$ of suspension of FC-37010 with respect to the surface of the ceramic product, corresponding to 0.9 g/m$^2$ of inorganic adhesive.

At this point, the specimen was dried for 10 minutes at 180°C. To a powder of titanium dioxide (KRONOS 1077 with specific surface area of 11.5 m$^2$/g) there was added an amount of 1.0 wt% (with respect to the weight of titanium dioxide) of the deflocculant Reoflux NF08/64 (LAMBERTI CERAMIC ADDITIVES®) so as to obtain a mix.

Next, an aqueous suspension of the mix thus obtained, with average diameter of the titanium dioxide, measured by means of scanning electron microscope (SEM), of 0.2 $\mu$m, was applied on a surface of the ceramic product (where the inorganic adhesive had already been applied). Said suspension had a concentration of titanium dioxide of 8g/l (weight of powder/volume of water). Application was carried out by means of an airbrush Airless (distributed by Air Power Group®) using a pressure of 35 bar. The amount of suspension applied was regulated so as to apply approximately 0.01 g/cm$^2$ of suspension of titanium dioxide with respect to the surface of the ceramic product corresponding to 0.8 g/m$^2$ of TiO$_2$.

The weight percentage of titanium dioxide, referred to the weight of titanium dioxide and of the inorganic adhesive of the two layers applied was thus 47 wt%.

The specimen thus obtained (treated with inorganic adhesive and titanium dioxide) was immediately fired in a single-layer roller kiln Solar mod.F.R.S.2.5/300/1250°C (produced by Solar Impianti s.r.l.) with the following thermal treatment: 11 minutes of preheating from room temperature up to the temperature of 652°C, 24 minutes in the firing area at 652°C, and 24 minutes of cooling for a total of 59 minutes.

Table 3

|  | Weight-percentage composition |
| --- | --- |
| SiO$_2$ | 42.5 wt% |
| Al$_2$O$_3$ | 0.5 wt% |
| B$_2$O$_3$ | 34 wt% |
| MgO | 0.8 wt% |
| CaO | 7.9 wt% |
|  |  |
| Na$_2$O+K$_2$O | 14.3 wt% |
|  |  |

**Example 4**

An inorganic adhesive "FC-37010" (distributed by Ferro Italia S.p.A.), which has the chemical composition given in Table 3, with average diameter of 4 $\mu$m measured with scanning electron microscope (SEM Zeiss EVO 40. D) and a softening point of 650°C (the softening-temperature range was determined using a heating microscope according to the IS0540:2008 standard), was applied as aqueous suspension on a surface of a fired ceramic product brought to the temperature of 200°C. The suspension had a concentration of inorganic adhesive of 9g/l. Application was carried out by means of an airbrush Airless (distributed by Air Power Group®) using a pressure of 25 bar. The amount of suspension applied was regulated so as to apply approximately 0.01g/cm$^2$ of suspension of FC-37010 with respect to the surface of the ceramic product, corresponding to 0.9g/m$^2$ of inorganic adhesive.

To a powder of titanium dioxide (KRONOS 1077 with specific surface area of 11.5 m$^2$/g) there was added 1.0 wt% (with respect to the weight of titanium dioxide) of the deflocculant Reoflux NF08/64 (LAMBERTI CERAMIC ADDITIVES®) so as to obtain a mix.

Next, an aqueous suspension of the mix thus obtained, with average diameter of the titanium dioxide, measured by means of scanning electron microscope (SEM), of 0.2 $\mu$m, was immediately applied on- a surface of the ceramic product (where the inorganic adhesive had already been applied) after its instantaneous drying obtained by the heat supplied by the ceramic product itself. Said suspension had a concentration of titanium dioxide of 8g/l (weight of powder/volume of water). Application was carried out by means of an airbrush Airless (distributed by Air Power Group®) using a pressure of 25 bar. The amount of suspension applied was regulated so as to apply approximately 0.01 g/cm$^2$ of suspension of titanium dioxide with respect to the surface of the ceramic product corresponding to 0.8 g/m$^2$ of TiO$_2$.

The weight percentage of titanium dioxide, referred to the weight of titanium dioxide and of the inorganic adhesive of the two layers applied was thus 47 wt%.

The specimen thus obtained (treated with inorganic adhesive and titanium dioxide) was immediately fired in a single-layer roller kiln Carfer mod.C-AT 1650/83280 (produced by Carfer Forni S.p.A.) with the following thermal treatment: 11 minutes of preheating from room temperature up to the temperature of 690°C, 24 minutes in the firing area at 690°C, and 40 minutes of cooling for a total of 75 minutes.

**Example 5**

An inorganic adhesive "FC-37010" (distributed by Ferro Italia S.p.A.), which has the chemical composition given in Table 3, with average diameter of 4 $\mu$m measured with scanning electron microscope (SEM Zeiss EVO 40. D) and a softening point of 650°C (the softening-temperature range was determined using a heating microscope according to the IS0540:2008 standard), was applied as aqueous suspension on a surface of a fired ceramic product brought to the temperature of 200°C. The suspension had a concentration of inorganic adhesive of 9g/l. Application was carried out by means of an airbrush Airless (distributed by Air Power Group®) using a pressure of 25 bar. The amount of suspension applied was regulated so as to apply approximately 0.0075g/cm$^2$ of suspension of FC-37010 with respect to the surface of the ceramic product, corresponding to 0.7g/m$^2$ of inorganic adhesive.

To a titanium dioxide powder (KRONOS 1077 with a specific surface area of 11.5 m$^2$/g), there was added an amount of 1.0 wt% (with respect to the weight of titanium dioxide) of the deflocculant Reoflux NF08/64 (LAMBERTI CERAMIC ADDITIVES®) so as to obtain a mix.

An aqueous suspension of the mix thus obtained, with average diameter of the titanium dioxide, measured by means of scanning electron microscope (SEM), of 0.2 $\mu$m, was then immediately applied on a surface of the ceramic product (to which the inorganic adhesive had already been applied) after its instantaneous drying obtained by the heat supplied by the ceramic product itself. Said suspension had a concentration of titanium dioxide of 8g/l (weight of powder/volume of water). Application was carried out with an airbrush Airless (distributed by Air Power Group®), using a pressure of 25 bar. The amount of suspension applied was regulated in such a way as to apply approximately 0.0075 g/cm$^2$ of titanium-dioxide suspension with respect to the surface of the ceramic product, corresponding to 0.6 g/m$^2$ of TiO$_2$.

The weight percentage of titanium dioxide, referred to the weight of titanium dioxide and of the inorganic adhesive of the two layers applied, was thus 46.2 wt%. The specimen thus obtained (treated with inorganic adhesive and titanium dioxide) was immediately fired in a single-layer roller kiln Carfer mod.C-AT 1650/83280(produced by Carfer Forni S.p.A.) with the following thermal cycle: 11 minutes of pre-heating from room temperature to a temperature of 690°C, 24 minutes in the firing area at 690°C, and 40 minutes of cooling for a total of 75 minutes.

**Example 6**

Photocatalysis in the aqueous phase

The photocatalytic activity in the liquid phase of the specimens was evaluated by monitoring the degradation of an organic colouring agent, indigo carmine (IC). The test was carried out at room temperature inside a reactor having a volume of 500 ml, containing the specimen, prepared in accordance with the methods described in the examples above, and with an area of approximately 16 cm$^2$. The aqueous suspension of the colouring agent had an initial IC concentration of 1ppm. The light source used was a 9-W mercury-vapour lamp (Philips PL-S 9W/08/2P, NL) with $\lambda_{max}$ = 370 nm placed on the specimen in order to obtain a power level of 28 W/m$^2$. In order to favour homogeneity within the solution, a recirculation pump was present inside the reactor. The variation in the IC concentration was evaluated by measuring the absorbance at the wavelength of 610 nm, using a spectrophotometer (Uvikon 923, F), and the photodegradation index $\eta$ was thus calculated applying the relationship

$$\eta(\%) = \frac{C_0 - C_S}{C_0} \times 100$$

where $C_0$ is the initial concentration of IC, i.e., 1ppm, and $C_s$ is the concentration after a defined period of irradiation. The measurements of IC concentration were monitored by taking samples of the solution from the reactor, at fixed intervals, specifically after 2, 4, 6, 24, 26, 28 and 30 hours of irradiation.

The results of the photodegradation index, after 30 hours of irradiation, appear in Table 4.

Table 4

|  | $\eta$, wt% |
|---|---|
| Example 1 | 60 |
| Example 2 | 30 |

(continued)

|  | $\eta$, wt% |
|---|---|
| Example 3 | 80 |
| Example 4 | 70 |
| Example 5 | 55 |

In order to evaluate the durability of the photocatalytic activity, the same samples were tested repeatedly, at least 4 times. The values found appear in Table 5.

Table 5

|  | $\eta$, wt% |
|---|---|
| Example 1 | 60 - 55 |
| Example 2 | 30 - 25 |
| Example 3 | 80 - 65 |
| Example 4 | 70 - 50 |
| Example 5 | 55 - 40 |

In order to obtain a better evaluation of the effect of ageing on the value of the photocatalytic activity, mechanical-stress tests were also carried out using an ultrasonic-bath treatment. After the fourth test carried out for determining photocatalytic activity, the specimen of Example 1 was subjected to an ultrasonic-bath treatment having a duration 5 minutes. Tests were then carried out to determine the photocatalytic activity, which at 30 hours still presented an appreciably high value of 55 wt%. After a second ultrasonic-bath treatment, again lasting 5 minutes, the value of the photocatalytic activity measured at 30 hours did not present significant differences as compared to the first test; i.e., it was around 50 wt%.

Said values are particularly significant when compared to those that were recorded (using methodologies akin to those described above) for ceramic products currently present on the market. It should be noted here that the best products currently on the market, advertised as having photocatalytic properties and coated with titanium dioxide, showed activities lower than 10 wt%.

Photocatalysis in the gas phase

(The photocatalysis tests in the aqueous phase were carried out in accordance with the UNI-11247-2007 Standard).

The photocatalytic activity in the gas phase of the specimens was evaluated by monitoring the degradation of $NO_x$ by the specimens under lighting. The test involved a flow of gas of 0.06 $m^3$/h, containing 0.55 ppm of $NO_x$ (0.15 ppm $NO_2$ + 0.4 ppm NO) and with a humidity range of 45 - 60%, being passed through a 3-litre reactor, inside which the specimen to be tested with an area of 64 $cm^2$ was placed, with the internal temperature of the reactor kept between 26 and 27°C.

The surface of the specimens was illuminated by a 300-W lamp (Vitalux Osram), positioned in such a way as to have a radiant-power density of 20 $W/m^2$, between 300 and 400nm.

The variations in the concentration of nitrogen oxides were determined using chemiluminescence measurements (Nitrogen Oxides Analyser, Model AC32M, Environment S.A.). The photocatalytic activity, $A_F$, expressed in m/h, is calculated as follows:

$$A = \frac{C_B - C_L}{C_B} \times \frac{F}{S} \times I$$

where $C_B$ and $C_L$, in ppm, are the concentrations after a constant value has been reached in the dark and under lighting, respectively, S is the area of the specimen, in $m^2$, F is the flow of gas in $m^3$/h, and I is the dimensional intensity of the light flow, obtained by relating the experimentally measured intensity I' (expressed in $W/m^2$) to 1000$W/m^2$, corresponding

to approximately 100000 Lux, i.e., the mean value that sunlight reaches at midday in the month of July.

Table 6 shows the results of the photocatalytic activity of the specimen, specimen A, containing the photocatalytic surface layer with titanium dioxide and of a specimen, standard specimen, altogether similar to specimen A but without the photocatalytic layer in regard to removal of $NO_x$ ($NO_2$+NO).

Table 6

| Specimens | $A_F$, m/h $NO_x$ | $A_F$, m/h NO |
|---|---|---|
| Standard | 13.1 | 32.8 |
| Specimen A | 30.0 | 111.1 |

The abatement of NO, in specimen A, is equal to 24% of the initial value; in flow conditions, the specimen is able to abate approximately 8 $\mu$g/h of NO.

**[0094]** Specimen A is a specimen obtained as described in Example 4. The standard specimen is a ceramic product that is similar to specimen A, but without the titanium dioxide layer.

**Claims**

1. A method for the production of a treated article; the method comprises: a step of surface treatment, during which an inorganic adhesive is applied on a surface of a base product comprising ceramic material; an application step, which follows the step of surface treatment and during which a $TiO_2$ powder having a specific surface area ranging from 5 to 20 m$^2$/g is deposited at least partially on the inorganic adhesive so as to obtain an intermediate article; and a heating step, during which the intermediate article is heated; the $TiO_2$ powder having $TiO_2$ particles with an average diameter (measured with scanning electron microscope - SEM) greater than or equal to 0.20 $\mu$m and less than or equal to 1 $\mu$m.

2. The method according to Claim 1, wherein the treated article is a tile.

3. The method according to Claim 1 or 2, wherein the intermediate article and/or the treated article has on its own surface from 0.3 to 3 g/m$^2$ of $TiO_2$.

4. The method according any one of the preceding claims, wherein the inorganic adhesive comprises: from 30 wt% to 50 wt%, with respect to its own total weight, of $SiO_2$; from 0 wt% to 30 wt%, with respect to its own total weight, of $Al_2O_3$; from 0 wt% to 40 wt%, with respect to its own total weight, of $B_2O_3$; from 0 wt% to 15 wt%, with respect to its own total weight, of BaO; from 0 wt% to 15 wt%, with respect to its own total weight, of CaO; from 0 wt% to 5 wt%, with respect to its own total weight, of MgO; from 0 wt% to 35 wt%, with respect to its own total weight, of ZnO; from 5 wt% to 20 wt%, with respect to its own total weight, of the sum of $Na_2O$ and $K_2O$; and from 0 wt% to 10 wt%, with respect to its own total weight, of $Li_2O$.

5. The method according to any one of the preceding claims, wherein the inorganic adhesive is applied in the form of particles of inorganic adhesive with an average diameter measured with scanning electron microscope (SEM) greater than or equal to 3 $\mu$m and less than or equal to 15 $\mu$m.

6. The method according to any one of the preceding claims, wherein the weight percentage of the $TiO_2$ powder with respect to the sum of the weight of the inorganic adhesive and of the $TiO_2$ particles that are applied is greater than or equal to 23 wt% and, more in particular, less than 50 wt%.

7. The method according to any one of the preceding claims and comprising a step of preparation of the base product, during which the base product is obtained by means of pressing and subsequent thermal treatment; the step of preparation of the base product preceding the application step.

8. The method according to any one of the preceding claims, wherein, during the step of surface treatment, an aqueous suspension of inorganic adhesive is applied on the base product.

9. The method according to any one of the preceding claims, wherein, during the application step, an aqueous suspension of $TiO_2$ powder is deposited on the inorganic adhesive.

10. The method according to any one of the preceding claims, wherein, during the step of surface treatment, the base product is at a temperature ranging from 130°C to 230°C.

11. The method according to any one of the preceding claims, wherein, during the application step, the base product is at a temperature ranging from 130°C to 230°C.

12. The method according to any one of the preceding claims, wherein the heating step comprises a step of thermal treatment, during which the intermediate article is kept at a temperature ranging from 550°C to 900°C.

13. The method according to Claim 12, wherein the step of thermal treatment has a duration longer than or equal to 20 minutes.

14. The method according to any one of the preceding claims, wherein, during the application step, there is applied an amount ranging from 0.3 to 3g/m$^2$ of $TiO_2$ with respect to the surface of the base product.

15. The method according to any one of the preceding claims, wherein the inorganic adhesive is applied in the form of particles of inorganic adhesive with an average diameter measured with scanning electron microscope (SEM) greater than or equal to 3 $\mu$m and less than or equal to 8 $\mu$m.

16. A treated article obtainable according to a method as defined in any one of Claims 1 to 15.

17. The article according to Claim 16, wherein the $TiO_2$ particles have an average diameter less than or equal to 0.8 $\mu$m.

18. The article according to Claims 17, wherein the weight percentage of the $TiO_2$ particles with respect to the sum of the weight of the inorganic adhesive and of the $TiO_2$ particles of the bottom layer and of the top layer is greater than or equal to 23 wt% and, more in particular, less than 50 wt%.

19. The article according to any one of Claims 16 to 18, wherein the inorganic adhesive comprises: from 30 wt% to 50 wt%, with respect to its own total weight, of $SiO_2$; from 0 wt% to 30 wt%, with respect to its own total weight, of $Al_2O_3$; from 0 wt% to 40 wt%, with respect to its own total weight, of $B_2O_3$; from 0 wt% to 15 wt%, with respect to its own total weight, of BaO; from 0 wt% to 15 wt%, with respect to its own total weight, of CaO; from 0 wt% to 5 wt%, with respect to its own total weight, of MgO; from 0 wt% to 35 wt%, with respect to its own total weight, of ZnO; from 5 wt% to 20 wt%, with respect to its own total weight, of the sum of $Na_2O$ and $K_2O$; and from 0 wt% to 10 wt%, with respect to its own total weight, of $Li_2O$.

20. The article according to any one of Claims 16 to 19 and having on its own surface from 0.3 to 3 g/m$^2$ of $TiO_2$.

21. The article according to any one of Claims 16 to 20, the article is a tile.

**Patentansprüche**

1. Verfahren zum Herstellen eines behandelten Gegenstandes,
   wobei das Verfahren folgendes aufweist:

   - einen Schritt des Behandelns einer Oberfläche, bei dem ein anorganisches Klebemittel auf eine Oberfläche eines Basisproduktes aufgebracht wird, das ein Keramikmaterial aufweist;
   - einen Schritt des Aufbringens, der dem Schritt des Behandelns einer Oberfläche folgt und bei dem ein $TiO_2$-Pulver mit einer spezifischen Oberfläche im Bereich von 5 bis 20 m$^2$/g zumindest teilweise auf das anorganische Klebemittel aufgetragen wird, so daß ein Zwischenprodukt erhalten wird; und
   - einen Schritt des Erwärmens, bei dem das Zwischenprodukt erwärmt wird;

   wobei das $TiO_2$-Pulver $TiO_2$-Teilchen mit einem mittleren Durchmesser (mit einem Rasterelektronenmikroskop (SEM) gemessen) von mehr als oder gleich 0,20 $\mu$m und weniger als oder gleich 1 $\mu$m aufweist.

2. Verfahren nach Anspruch 1,
   wobei der behandelte Gegenstand eine Fliese ist.

3.  Verfahren nach Anspruch 1 oder 2,
    wobei das Zwischenprodukt und/oder der behandelte Gegenstand auf seiner eigenen Oberfläche 0,3 bis 3 g/m$^2$ TiO$_2$ aufweist.

4.  Verfahren nach einem der vorstehenden Ansprüche,
    wobei das anorganische Klebemittel folgendes aufweist:

    30 bis 50 Gew.-% SiO$_2$, und zwar auf sein eigenes Gesamtgewicht bezogen;
    0 bis 30 Gew.-% Al$_2$O$_3$, und zwar auf sein eigenes Gesamtgewicht bezogen;
    0 bis 40 Gew.-% B$_2$O$_3$, und zwar auf sein eigenes Gesamtgewicht bezogen;
    0 bis 15 Gew.-% BaO, und zwar auf sein eigenes Gesamtgewicht bezogen;
    0 bis 15 Gew.-% CaO, und zwar auf sein eigenes Gesamtgewicht bezogen;
    0 bis 5 Gew.-% MgO, und zwar auf sein eigenes Gesamtgewicht bezogen;
    0 bis 35 Gew.-% ZnO, und zwar auf sein eigenes Gesamtgewicht bezogen;
    5 bis 20 Gew.-% der Summe von Na$_2$O und K$_2$O, und zwar auf sein eigenes Gesamtgewicht bezogen; und
    0 bis 10 Gew.-% Li$_2$O, und zwar auf sein eigenes Gesamtgewicht bezogen.

5.  Verfahren nach einem der vorstehenden Ansprüche,
    wobei das anorganische Klebemittel in Form von Teilchen eines anorganischen Klebemittels mit einem mittleren Durchmesser, der mit einem Rasterelektronenmikroskop (SEM) gemessen wird, von mehr als oder gleich 3 μm und weniger als oder gleich 15 μm aufgebracht wird.

6.  Verfahren nach einem der vorstehenden Ansprüche,
    wobei der Gewichtsprozentsatz von TiO$_2$-Pulver in bezug auf die Summe des Gewichts von anorganischem Klebemittel und TiO$_2$-Teilchen, die aufgebracht werden, größer als oder gleich 23 Gew.-% und insbesondere kleiner als 50 Gew.-% ist.

7.  Verfahren nach einem der vorstehenden Ansprüche,
    das einen Schritt des Vorbereitens des Basisproduktes aufweist, bei dem das Basisprodukt durch Pressen und anschließende Wärmebehandlung erhalten wird; wobei der Schritt des Vorbereitens des Basisproduktes dem Schritt des Auftragens vorausgeht.

8.  Verfahren nach einem der vorstehenden Ansprüche,
    wobei während des Schrittes des Behandelns der Oberfläche auf das Basisprodukt eine wäßrige Suspension eines anorganischen Klebemittels aufgebracht wird.

9.  Verfahren nach einem der vorstehenden Ansprüche,
    wobei während des Schritts des Aufbringens auf dem anorganischen Klebemittel eine wäßrige Suspension von TiO$_2$-Pulver aufgetragen wird.

10. Verfahren nach einem der vorstehenden Ansprüche,
    wobei das Basisprodukt während des Schrittes des Behandelns der Oberfläche eine Temperatur im Bereich von 130 °C bis 230 °C hat.

11. Verfahren nach einem der vorstehenden Ansprüche,
    wobei das Basisprodukt beim Schritt des Aufbringens eine Temperatur im Bereich von 130 °C bis 230 °C hat.

12. Verfahren nach einem der vorstehenden Ansprüche,
    wobei der Schritt des Erwärmens einen Schritt der Wärmebehandlung aufweist, bei dem das Zwischenprodukt bei einer Temperatur im Bereich von 550 °C bis 900 °C gehalten wird.

13. Verfahren nach Anspruch 12,
    wobei der Schritt der Wärmebehandlung eine Dauer besitzt, die gleich 20 Minuten oder länger ist.

14. Verfahren nach einem der vorstehenden Ansprüche,
    wobei beim Schritt des Aufbringens eine Menge an TiO$_2$ im Bereich von 2 0,3 bis 3 g/m$^2$ aufgebracht wird, und zwar auf die Oberfläche des Basisproduktes bezogen.

**15.** Verfahren nach einem der vorstehenden Ansprüche,
wobei das anorganische Klebemittel in Form von Teilchen eines anorganischen Klebemittels mit einem mittleren Durchmesser, der mit einem Rasterelektronenmikroskop (SEM) gemessen wird, von mehr als oder gleich 3 $\mu$m und weniger als oder gleich 8 $\mu$m aufgebracht wird.

**16.** Behandelter Gegenstand,
der mit einem Verfahren nach einem der Ansprüche 1 bis 15 erhältlich ist.

**17.** Gegenstand nach Anspruch 16,
wobei die $TiO_2$-Teilchen einen mittleren Durchmesser von weniger als oder gleich 0,8 $\mu$m aufweisen.

**18.** Gegenstand nach Anspruch 17,
wobei der Gewichtsprozentsatz der $TiO_2$-Teilchen in bezug auf die Summe der Gewichte von anorganischem Klebemittel und $TiO_2$-Teilchen der Grundschicht und der Deckschicht mehr als oder gleich 23 Gew.-% und insbesondere weniger als 50 Gew.-% beträgt.

**19.** Gegenstand nach einem der Ansprüche 16 bis 18,
wobei das anorganische Klebemittel folgendes aufweist:

30 bis 50 Gew.-% $SiO_2$, und zwar auf sein eigenes Gesamtgewicht bezogen;
0 bis 30 Gew.-% $Al_2O_3$, und zwar auf sein eigenes Gesamtgewicht bezogen;
0 bis 40 Gew.-% $B_2O_3$, und zwar auf sein eigenes Gesamtgewicht bezogen;
0 bis 15 Gew.-% BaO, und zwar auf sein eigenes Gesamtgewicht bezogen;
0 bis 15 Gew.-% CaO, und zwar auf sein eigenes Gesamtgewicht bezogen;
0 bis 5 Gew.-% MgO, und zwar auf sein eigenes Gesamtgewicht bezogen;
0 bis 35 Gew.-% ZnO, und zwar auf sein eigenes Gesamtgewicht bezogen;
5 bis 20 Gew.-% der Summe von $Na_2O$ und $K_2O$, und zwar auf sein eigenes Gesamtgewicht bezogen; und
0 bis 10 Gew.-% $Li_2O$, und zwar auf sein eigenes Gesamtgewicht bezogen.

**20.** Gegenstand nach einem der Ansprüche 16 bis 19,
der auf seiner eigenen Oberfläche 0,3 bis 3 g/m$^2$ $TiO_2$ aufweist.

**21.** Gegenstand nach einem der Ansprüche 16 bis 20,
wobei der Gegenstand eine Fliese ist.

**Revendications**

**1.** Procédé de production d'un article traité ; le procédé comprend : une étape de traitement de surface, au cours de laquelle un adhésif inorganique est appliqué sur la surface d'un produit de base comprenant un matériau céramique ; une étape d'application, qui suit l'étape de traitement de surface et au cours de laquelle une poudre de $TiO_2$ ayant une surface spécifique située dans la plage de 5 à 20 m$^2$/g est déposée au moins partiellement sur l'adhésif inorganique de manière à obtenir un article intermédiaire ; et une étape de chauffage, au cours de laquelle l'article intermédiaire est chauffé ; la poudre de $TiO_2$ ayant des particules de $TiO_2$ présentant un diamètre moyen (mesuré par microscope électronique à balayage - MEB) supérieur ou égal à 0,20 $\mu$m et inférieur ou égal à 1 $\mu$m.

**2.** Procédé selon la revendication 1, dans lequel l'article traité est une dalle.

**3.** Procédé selon la revendication 1 ou 2, dans lequel l'article intermédiaire et/ou l'article traité présente sur sa surface de 0,3 à 3 g/m$^2$ de $TiO_2$.

**4.** Procédé selon l'une quelconque des revendications précédentes, dans lequel l'adhésif inorganique comprend : de 30 % en poids à 50 % en poids, par rapport à son propre poids total, de $SiO_2$ ; de 0 % en poids à 30 % en poids, par rapport à son propre poids total, d'$Al_2O_3$ ; de 0 % en poids à 40 % en poids, par rapport à son propre poids total, de $B_2O_3$ ; de 0 % en poids à 15 % en poids, par rapport à son propre poids total, de BaO ; de 0 % en poids à 15 % en poids, par rapport à son propre poids total, de CaO ; de 0 % en poids à 5 % en poids, par rapport à son propre poids total, de MgO ; de 0 % en poids à 35 % en poids, par rapport à son propre poids total, de ZnO ; de 5 % en poids à 20 % en poids, par rapport à son propre poids total, de la somme de $Na_2O$ et de $K_2O$ ; et de 0 % en poids à 10 % en poids, par rapport à son propre poids total, de Li$_2$O.

5. Procédé selon l'une quelconque des revendications précédentes, dans lequel l'adhésif inorganique est appliqué sous la forme de particules d'adhésif inorganique présentant un diamètre moyen mesuré par microscope électronique à balayage (MEB) supérieur ou égal à 3 $\mu$m et inférieur ou égal à 15 $\mu$m.

6. Procédé selon l'une quelconque des revendications précédentes, dans lequel le pourcentage en poids de la poudre de TiO$_2$ par rapport à la somme du poids de l'adhésif inorganique et des particules de TiO$_2$ qui sont appliquées est supérieur ou égal à 23 % en poids et, plus particulièrement, inférieur à 50 % en poids.

7. Procédé selon l'une quelconque des revendications précédentes et comprenant une étape de préparation du produit de base, au cours de laquelle le produit de base est obtenu au moyen d'une pression et d'un traitement thermique subséquent ; l'étape de préparation du produit de base précédant l'étape d'application.

8. Procédé selon l'une quelconque des revendications précédentes, dans lequel, au cours de l'étape de traitement de surface, une suspension aqueuse d'adhésif inorganique est appliquée sur le produit de base.

9. Procédé selon l'une quelconque des revendications précédentes, dans lequel, au cours de l'étape d'application, une suspension aqueuse de poudre de TiO$_2$ est déposée sur l'adhésif inorganique.

10. Procédé selon l'une quelconque des revendications précédentes, dans lequel, au cours de l'étape de traitement de surface, le produit de base est à une température située dans la plage de 130 °C à 230 °C.

11. Procédé selon l'une quelconque des revendications précédentes, dans lequel, au cours de l'étape d'application, le produit de base est à une température située dans la plage de 130 °C à 230 °C.

12. Procédé selon l'une quelconque des revendications précédentes, dans lequel l'étape de chauffage comprend une étape de traitement thermique, au cours de laquelle l'article intermédiaire est maintenu à une température située dans la plage de 550 °C à 900 °C.

13. Procédé selon la revendication 12, dans lequel l'étape de traitement thermique a une durée supérieure ou égale à 20 minutes.

14. Procédé selon l'une quelconque des revendications précédentes, dans lequel, au cours de l'étape d'application, est appliquée une quantité située dans la plage de 0,3 à 3 g/m$^2$ de TiO$_2$ par rapport à la surface du produit de base.

15. Procédé selon l'une quelconque des revendications précédentes, dans lequel l'adhésif inorganique est appliqué sous la forme de particules d'adhésif inorganique présentant un diamètre moyen mesuré par microscope électronique à balayage (MEB) supérieur ou égal à 3 $\mu$m et inférieur ou égal à 8 $\mu$m.

16. Article traité pouvant être obtenu selon un procédé tel que défini dans l'une quelconque des revendications 1 à 15.

17. Article selon la revendication 16, dans lequel les particules de TiO$_2$ présentent un diamètre moyen inférieur ou égal à 0,8 $\mu$m.

18. Article selon la revendication 17, dans lequel le pourcentage en poids des particules de TiO$_2$ par rapport à la somme du poids de l'adhésif inorganique et des particules de TiO$_2$ de la couche inférieure et de la couche supérieure est supérieur ou égal à 23 % en poids et, plus particulièrement, inférieur à 50 % en poids.

19. Article selon l'une quelconque des revendications 16 à 18, dans lequel l'adhésif inorganique comprend : de 30 % en poids à 50 % en poids, par rapport à son propre poids total, de SiO$_2$ ; de 0 % en poids à 30 % en poids, par rapport à son propre poids total, d'Al$_2$O$_3$ ; de 0 % en poids à 40 % en poids, par rapport à son propre poids total, de B$_2$O$_3$ ; de 0 % en poids à 15 % en poids, par rapport à son propre poids total, de BaO ; de 0 % en poids à 15 % en poids, par rapport à son propre poids total, de CaO ; de 0 % en poids à 5 % en poids, par rapport à son propre poids total, de MgO ; de 0 % en poids à 35 % en poids, par rapport à son propre poids total, de ZnO ; de 5 % en poids à 20 % en poids, par rapport à son propre poids total, de la somme de Na$_2$O et de K$_2$O ; et de 0 % en poids à 10 % en poids, par rapport à son propre poids total, de Li$_2$O.

**20.** Article selon l'une quelconque des revendications 16 à 19 et ayant sur sa propre surface de 0,3 à 3 g/m$^2$ de TiO$_2$.

**21.** Article selon l'une quelconque des revendications 16 à 20, l'article est une dalle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6210779 B